# EUROPEAN PATENT APPLICATION

(11) **EP 1 795 981 A1**
(43) Date of publication of application: **13.06.2007**
(21) Application number: 06125544.4
(22) Date of filing: 06.12.2006
(51) Int. Cl.: G05B 19/042

(54) **Industrial controller and method for providing an industrial controller**

(30) Priority: 07.12.2005 US 295633
(71) Applicant: Noveo Technologies Inc., Anjou, Québec H1J 2E8 (CA)
(72) Inventor: Dionne, Jean-Pierre, Anjou Québec H1J 3C6 (CA)
(74) Representative: Fleuchaus, Michael A.

(57) **Abstract**

The present invention relates to a generic industrial controller that is easily configurable for different applications. By combining the power supply and by using standard connectors, the controller assembly fits nicely in a convenient economical standard electrical box. The industrial controller uses harnesses between its input port and sensors and between its output ports and controlled device to be controlled. The invention also relates to a method for providing a generic industrial controller that may be used in different applications to control different controlled device by providing different instruction sets and different harnesses. Another aspect of the invention relates to a set of industrial controllers being identical except for their instruction sets and harnesses.

## Description

### FIELD OF THE INVENTION

This invention relates to the field of industrial controllers. More specifically, the invention relates to a programmable logic controller for use in buildings, industrial application or within machines for the control of industrial processes and machines.

### BACKGROUND OF THE INVENTION

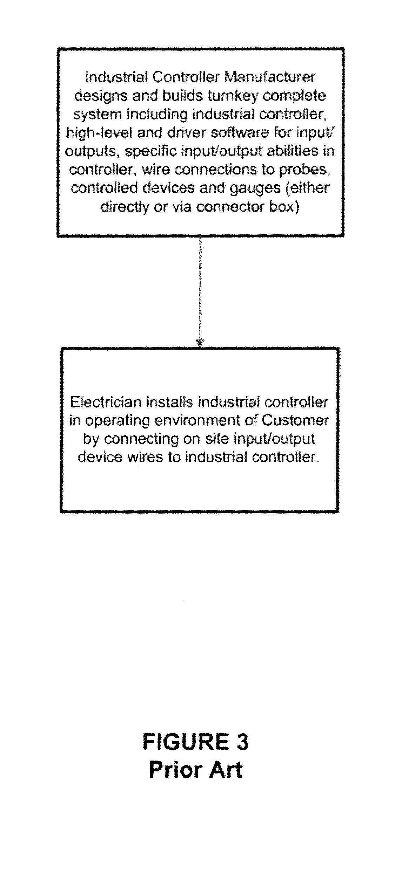

Industrial controllers are special purpose computers used for controlling industrial processes and manufacturing equipment on a real-time basis. For example, industrial controllers are used to regulate room temperature, humidity, fans, lighting and other building automation functions. As illustrated in Figure 3, a processor of the industrial controller, under the direction of a stored program, examines a set of inputs reflecting the status of both the controlled process and conditions influencing the control of the process and changes a set of outputs controlling the industrial process accordingly. The inputs and outputs may be binary, that is present or not, or proportionally variable, providing a value within a continuous range such as temperature, for example. Analog signals may be converted to digital signals for processing.

A controller requires many functions provided by different components. First, the processor is usually provided on the main printed circuit board and executes the program. Input/output (I/O) ports are also provided to interface with equipment or probes. A power supply is further required to operate the controller. Optionally, a communication port, or bus interface, is provided for advanced communication with other controllers, for example.

The inputs and outputs are processed by I/O circuitry that performs any necessary data type conversion, level shifting, isolation and amplification of the signals to and from the processor so as to be compatible with the signals required by the industrial controller. Processor and I/O circuitry for industrial control are well known in the art.

Existing industrial controllers may be produced in which the processor and the necessary I/O circuits are contained within a single housing. For some applications such as when the controller is installed within a cabinet, it is desirable for the housing to have as small a base, or footprint, as possible to preserve cabinet space. Typically, a small footprint is accommodated by dividing the internal circuitry of the controller into multiple circuit cards stacked one on top of another. In addition to holding the processor and I/O circuits, the industrial controller must support terminal blocks or the like providing a means to connect the signals of the controlled equipment to the I/O circuitry. Two sets of terminal blocks are usually provided, one for input signals and one for output signals. The terminal blocks may also provide connections for line power in, user power out, and other signals known in the art. In the field of industrial controllers, terminal blocks are typically of the type using a screw to hold the wires. These types of terminal blocks are bulky, which adds to the size of the controller. Furthermore, this type of terminal requires much manual manipulation by an electrician or other installer adding cost to the process.

Typical industrial controllers require a power voltage that is different from the voltage of the electrical mains. Hence, a separate power supply is used to convert voltage from the electrical mains to the voltage required by the controller. The power supply is annexed to the controller, taking further space, which may be of concern when packaging the controller within a cabinet. Furthermore, the power supply needs to be connected to the power input terminal blocks of the controller, requiring additional wiring and manipulations.

The controller may further incorporate communication ports for remote control, networking with other controllers or remote diagnostic. Such communications are typically done using a standard communication protocol such as BACnet^{™} or Modbus^{™}, for example.

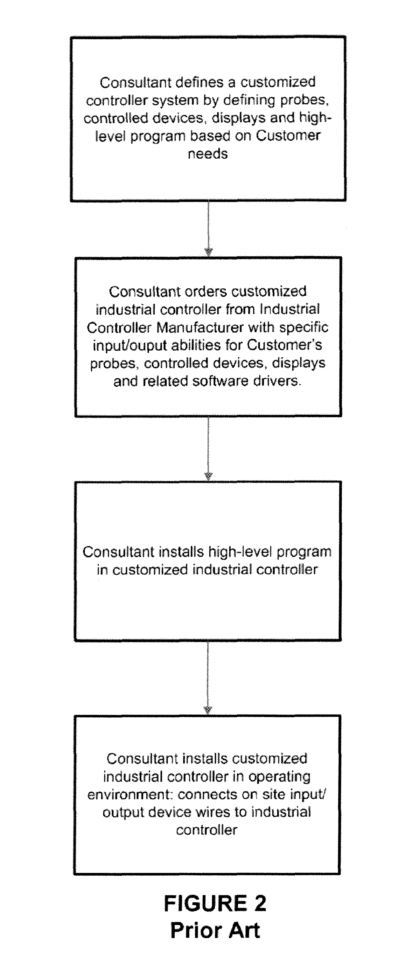

It is customary, in the field of industrial controllers, to provide controllers pre-configured to address a specialized task as defined by the type and the number of inputs and outputs, such as reading temperature and controlling specific types of valves, vents and fan motors for an air-conditioning control application. Such a specialized controller comes with software drivers for the I/O devices, and leaves the high level program to a consultant to define, as illustrated in Figure 2.

Thus, when a customer has an application where he or she needs to control a piece of equipment, he consults a consultant of industrial control equipment, as illustrated in Figure 2. The consultant analyzes the needs of the customer and based on his needs, defines a customized control system: industrial controller, probes and high-level program. The consultant then orders a customized industrial controller from the industrial controller manufacturer with specific input/output abilities and all related drivers software on the controller card for the customer's probes, controlled devices and displays. Subsequently, the consultant installs the high-level program on the customized controller card of the industrial controller. Finally, an electrician, either the consultants' or the customer's, installs the industrial controller in the operating environment of the customer: on site, the electrician connects the wires of all input/output devices to the controller card of the industrial controller. Wires are first connected to either the terminal block of the controller or to the external device, then the wires is then mounted and run between the controller and the device, and finally the wires are cut and connected to the other end. A pre-built harness is not used.

Alternatively, it sometimes happens that the industrial controller manufacturer designs and builds a specific, complete turnkey control system for a customer. This process is illustrated in Figure 3. The turnkey control system includes the controller card, the high-level and software drivers for the inputs/outputs, and the specific input/output abilities on the controller card. The industrial control manufacturer typically provides a controller housing that contains the controller circuitry and any further electrical or electronic components, such as power supply, gauges or displays, and in some cases motor controllers. The controller housing may have cable connectors mounted in its walls for plugging in cables leading to various I/O devices. Wiring between the controller, connectors and peripheral devices within the housing is done by the control manufacturer. The only thing left is for the customer's technician to install the industrial controller in its operating environment and to connect the cables of the input/output devices to the connectors of the industrial controller housing. In this case, a separate cable is connected between each external device and the controller housing, and no external harness is used.

This excessive level of customization in present industrial controllers is a real problem when a customer needs to modify his installation because, for example, he bought a new piece of equipment or if he simply desires to provide better efficiency by adding probes and/or controls. Presently, the customer is not capable of modifying the controller card of the industrial controller because it does not have the right input/output design. The customer therefore needs to buy a new controller or a new extension card.

Customization of the specific application controllers also creates a problem for product manufacturers integrating these controllers in their products. Indeed, each specific application controller is limited in its applications to the particular one application it was custom designed for. He therefore needs to ask for a controller designed specifically for a new application.

There is therefore a need to provide an industrial controller that combines the advantages of being generic in its design while being easily configurable for different applications, having all its functions integrated rather than necessitating many separate modules, being physically compact and being both quick and cheap to manufacture and install. There is a need to provide an industrial controller that does not require a high level of expertise to select, configure and install. An industrial controller that is user friendly and "plug and play" or turnkey is required.

### SUMMARY OF THE INVENTION

It has been discovered that there is a need for an industrial controller that can be installed within the context of an existing industrial system having a predetermined expected physical installation. It has been discovered that by building a wiring harness especially for such existing industrial systems, the existing industrial systems can receive a control system having a controller and the special wire harness interconnecting probes or controls and displays or controlled devices to the controller. By having the specially designed harness matching the physical installation of the industrial system, namely a harness with predefined dimensions to efficiently allow I/O devices to be connected to the controller with the controller mounted in the physical installation, a technician can complete installation of the controller without having to hook-up the terminals.

The approach according to the invention differs from the prior art in that the installer uses an application-specific harness and an application specific controller program obtained from industrial controller suppliers with an essentially generic controller to install in the environment an industrial controller solution.

In this specification, "harness" is understood to mean a group of insulated electrical and/or optical fiber conductors that is bound together near a proximal end as a trunk and has at least two branches from the trunk and at least three terminations, each branch comprising a single conductor termination or a bound sub-group of conductors, for leading to different I/O device terminations at different expected installation positions within the expected industrial system.

In accordance with a first aspect of the present invention, there is provided a set of industrial controllers for controlling controlled devices. The set of industrial controllers comprises a plurality of common industrial controllers. Each industrial controller itself comprises at least one printed circuit board, a processor mounted on one printed circuit board and a power supply mounted on one printed circuit board. At least two of the industrial controllers comprise a first instruction set and a first harness, both corresponding to a first application. Similarly, at least two other of the industrial controllers comprise a second instruction set and a second harness corresponding to a second application. Notably, the first and second applications are different, the first and second instruction sets are different and the first and second harnesses are also different. Advantageously, the power supplies are capable of operating directly from electrical mains having a voltage comprised between 85 VAC and 265 VAC. Preferably, at least one of the industrial controllers is mounted within a standard electrical junction box. More preferably, the standard electrical junction box is of dimensions 4 11/16 inches by 4 11/16 inches.

In accordance with a second aspect of the present invention, there is provided a method for providing industrial controllers for controlling controlled devices. The method comprises the first step of a) defining a first and a second control applications where each control application involves a plurality of measurements or control inputs including at least one measurement input and a plurality of display or device outputs including at least one controlled device output for controlling an industrial system, process or machine in response to the inputs. Each control application further involves a predetermined expected physical installation of probes or controls providing the inputs, and of displays or controlled devices receiving the outputs. The method further comprise the next steps of b) providing a common industrial controller, c) defining a first and a second instruction sets corresponding respectively to the first and second control applications, d) providing a first and a second harnesses having dimensions and conductor types corresponding respectively to the first and second inputs, outputs and expected physical installations, e) supplying the industrial controller with the first instruction set and the first harness for installation to provide the first control application and f) supplying the industrial controller with the second instruction set and the second harness for installation to provide the second application. Advantageously, the method further comprises 1) defining first installer instructions and second installer instructions for each of the applications, 2) defining a first installer installing the controller with the first instruction set and the first harness in accordance with the first installer instructions and 3) a second installer installing the controller with the second instruction set and the second harness in accordance with said second installer instructions. Preferably, the method further comprises the step of installing the first industrial controller in a first standard electrical junction box. More preferably, the method comprises the step of installing the second industrial controller in a second standard electrical junction box. Advantageously, the method further comprises the step of directly connecting the first industrial controller to electrical mains having a first voltage. The method may further comprise the step of directly connecting the second industrial controller to electrical mains having a second voltage different from the first voltage.

It is an object of the present invention to obviate or mitigate the disadvantages of known methods and apparatus for controlling controlled devices using an industrial controller. It is a further object of the present invention to provide an industrial controller that combines many advantages over the prior art. Being of a generic design, it allows the manufacturer to optimize its production while minimizing the product cost. Moreover, it is easily configurable by using a standard programming language to define the drivers while still providing these latter for quick and easy programming of the controller by a typical user using an instruction set. By combining the power supply and by using standard connectors, the controller assembly fits nicely in a convenient economical standard electrical box. Furthermore, by using harnesses, installation time and cost is minimized. It is still a further object of the present invention to provide a method for providing a generic industrial controller that may be used in different applications to control different controlled devices by providing different instruction sets and different harnesses. It is still another object of the present invention to provide an assembly of industrial controllers being identical except for their instruction sets and for the length of their harnesses.

### BRIEF DESCRIPTION OF THE DRAWINGS

A detailed description of examples of implementation of the present invention is provided herein below in which reference is made to the following drawings, in which:

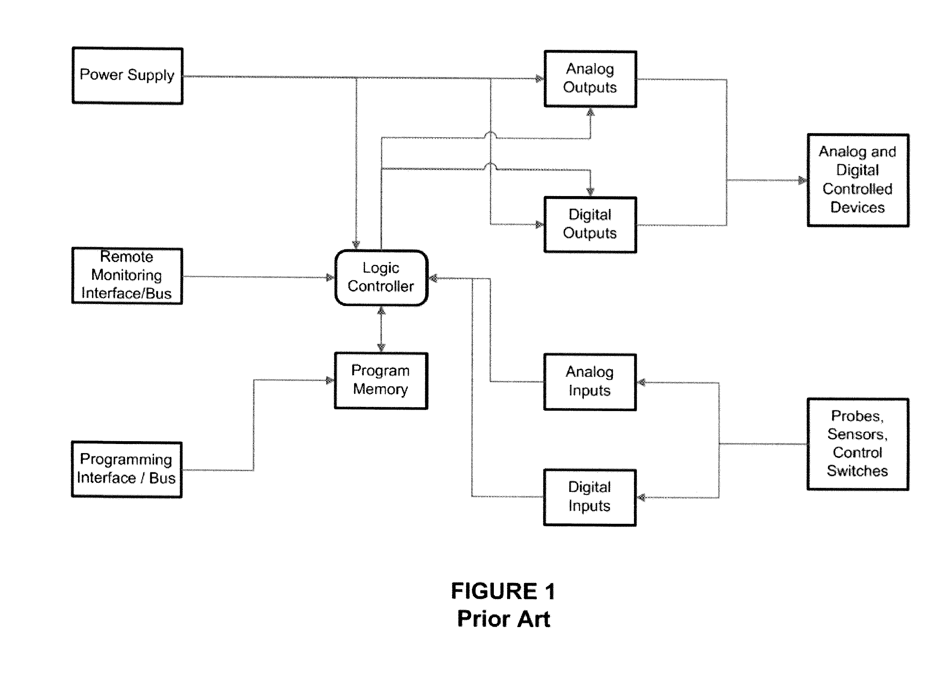

Figure 1 is schematic diagram of a typical industrial controller system of the prior art;
Figure 2 is a process flow diagram showing a first process for providing a control system according to the prior art;
Figure 3 is a process flow diagram showing a second process for providing a control system according to the prior art;
Figure 4 is a process flow diagram of a method for providing an industrial controller system in accordance with an embodiment of the present invention;
Figure 5 is a schematic diagram of an industrial controller system in accordance with an alternate embodiment of the present invention;
Figure 6 is a top view of the industrial controller of Figure 5 without its housing;
Figure 7 is an exploded isometric view of the industrial controller of Figure 5 fitted in a standard electrical junction box;
Figure 8 is an exploded isometric view of the industrial controller of Figure 5;
Figure 9 is an isometric view of a typical assembly of an industrial controller system in accordance with an alternate embodiment of the present invention.
Figure 10 is a schematic view of a harness in accordance with an embodiment of the present invention.

### DETAILED DESCRIPTION OF THE INVENTION

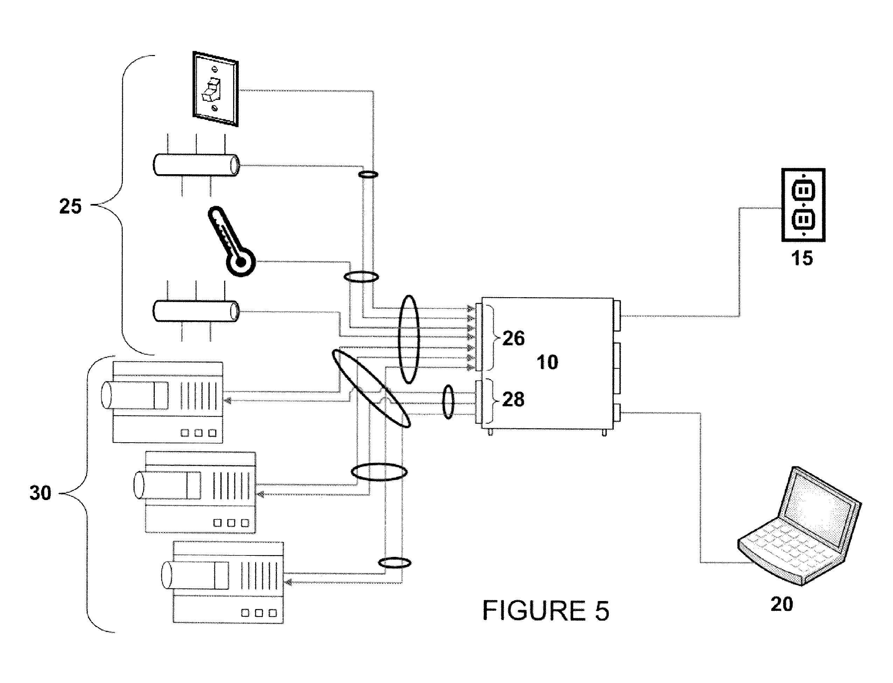

Figure 5 depicts a schematic typical installation for the industrial controller 10 of the invention. The industrial controller 10 is first connected directly to the electrical mains 15. A computer 20 is used to store instructions in the controller 10. Sensors 25 send input signals 26 to the controller 10. Based on both its stored instructions and input signals 26 received from the sensors, the controller 10 sends output signals 28 in order to control controlled devices 30. These controlled devices 30 may be a wide variety of industrial equipment such as process control valves, pumps, conveyors, actuators, HVAC components, humidifiers, fans, displays, gauges, lighting or other building automation functions. In a broader scope, when the industrial controller 10 is used as a component of another product, the controlled devices could further be other components of the product, such as an electric motor, for example.

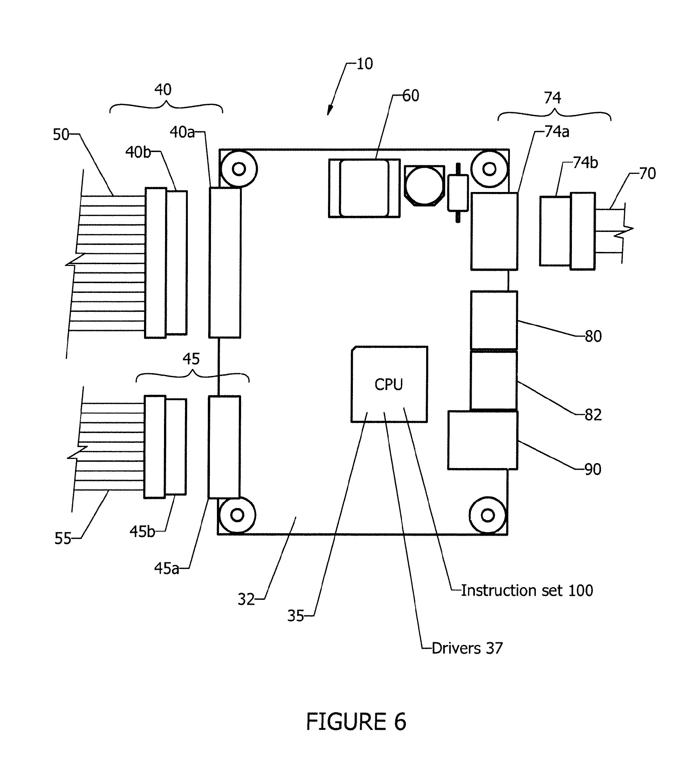

Turning now to Figure 6, there is depicted the interior of an industrial controller 10, more precisely its printed circuit board 32 having its major components mounted on it. A processor 35 serves as the basis for the controller. Schematically illustrated in Figure 6, the processor 35 contains a higher level instruction set 100 for the application and sets of instructions for the device drivers 37. For ease of application programming, the program is written in a common programming language, in the present case C. This approach allows an advanced user to easily modify the drivers 37 such that the industrial controller 10 may be tailored for controlling different types of controlled devices 30.

The processor 35 receives input signals 26 (not shown) from sensors, probes or other such devices through the input connector 40. The female part 40a of input connector 40 is fixed to the printed circuit board 32. Based on these input signals 26 and the instruction set 100 it caries, the processor 35 sends outputs signals 28 (not shown) to controlled devices 30, shown in Figure 5, through the output connector 45. Contrary to conventional practice in the field of industrial controllers, input and output connectors 40 and 45 are not terminal blocks but rather are standard connectors. Standard connectors provide the advantage of taking less space and basically eliminating the time it takes an electrician to connect wires to the terminal blocks. An input harness 50 having the male part 40b of the input connector 40 is provided to connect the sensors 25, shown in Figure 5, to the industrial controller 10. Similarly, an output harness 55 having a male part 45b of the output connector 45 is used to connect the industrial controller 10 to the controlled device 30. Optionally, the sensor end of input harness 50 or the controlled device end of the output harness 55 may also be fitted with a standard connector if, respectively, the sensors 25 or the controlled devices 30 (both shown in Figure 5) are so equipped.

The industrial controller further uses communication ports for networking with other industrial controllers for example. Preferably, RS-485 ports are used for both the incoming communication port 80 and the outgoing communication port 82. For applications in commercial or industrial building, the BACnet^{™} and/or Modbus^{™} communication standards are preferably used.
Such networking capabilities are well known in the art and will not be explained in further details. The industrial controller 10 also includes a service port 90. The service port is used to connect the industrial controller 10 to the computer 20, shown in Figure 5, either for programming the processor 35 at a first level of programming by an advanced user or for inputting instructions to the processor 35 at a second level. Once the instruction set 100 is downloaded in the processor 35, the computer may be disconnected from the industrial controller 35. Preferably, a standard RS232D connector is used for the service port 90. The computer 20 may also be connected remotely to industrial controller 10. In this case, the industrial controller 10 is connected to a modem which in turn is connected to internet. It is then possible to connect the computer 20 to the industrial controller 10 through internet.

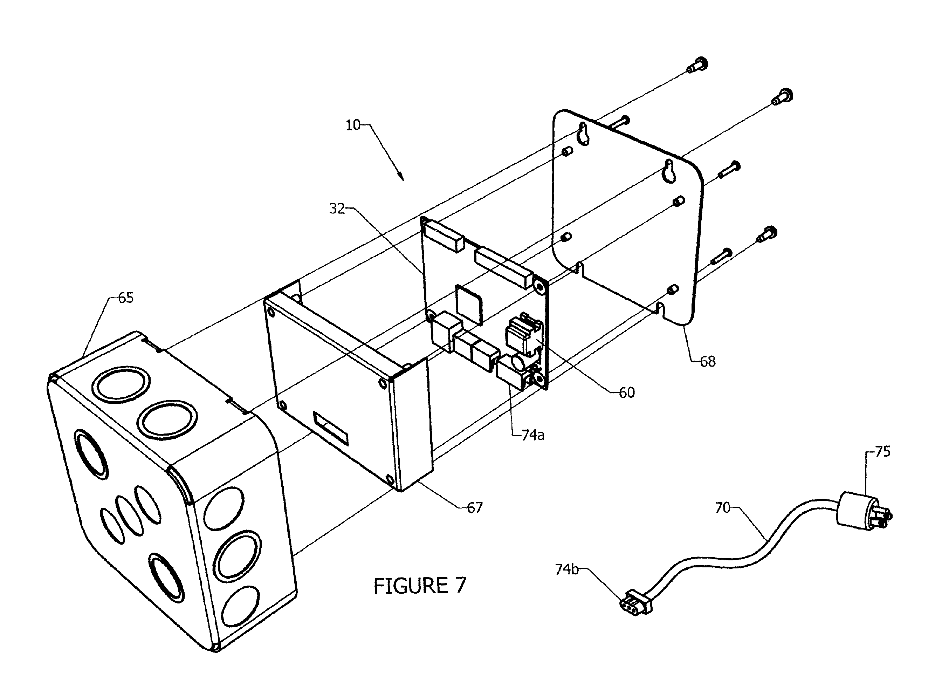

Typical installations of industrial controllers require a separate power supply to convert the voltage coming from the electrical mains 15 (shown in Figure 5), normally either 120 VAC or 240 VAC, to a voltage suitable for the industrial controller 10. As better shown in Figure 7, in the present invention, because the industrial controller 10 is designed to have its own internal power supply 60, there is not need to resort to an external one. The internal power supply 60 is mounted within the same housing 67 as the rest of the industrial controller components, preferably on the same printed circuit board 32. Therefore, the industrial controller 10 is directly connected to the electrical mains 15. Advantageously, this design reduces the overall cost by combining two pieces of equipment into one and by saving on wiring cost by an electrician. Furthermore, by integrating both the industrial controller 10 and power supply in one device, space is also saved. This is especially important when mounting the industrial controller 10 inside a cabinet, or when it is used as a component of a larger integrated apparatus. Advantageously, the internal power supply 60 is designed to be compatible with practically any type of electrical grid around the world. The internal power supply 60 is capable of functioning on voltage ranging from 85 VAC to 265 VAC and can operate on both 50 Hz and 60 Hz as well.

Advantageously, the industrial controller 10 is designed to occupy as little space as possible such that it may be inserted in a standard electrical junction box 65 of dimensions 4 11/16 inches x 4 11/16 inches. The printed circuit board 32 is mounted directly in its housing 67, which may either be used as is, or preferably placed in an electrical junction box 65. The housing 67 is then fixed to the interior surface of the electrical box cover 68. The electrical box cover 68 is then fixed to the electrical junction box 65, as it would normally be, totally enclosing the industrial controller 10 within the electrical junction box 65. Alternatively, the industrial controller 10 could be mounted directly at the bottom of the electrical junction box 65. Using a standard electrical junction box provides many advantages. An electrical junction box is cheap, already designed to be mounted to the structure of a building and is also approved for electrical connections.

For its power supply input, the industrial controller 10 may be directly connected to an electricity source, such as an electric panel, or preferably, be connected to a standard electric outlet via a standard connector. Hence, a power cord having a standard electrical plug 75 at one end and a male portion 74b of a power supply connector 74 at the other end is preferably used. The male portion 74b of the power supply connector 74 matches a female portion 74a fixed on the printed circuit board 32. The standard electrical plug 75 connects to the electrical mains 15 shown in Figure 5.

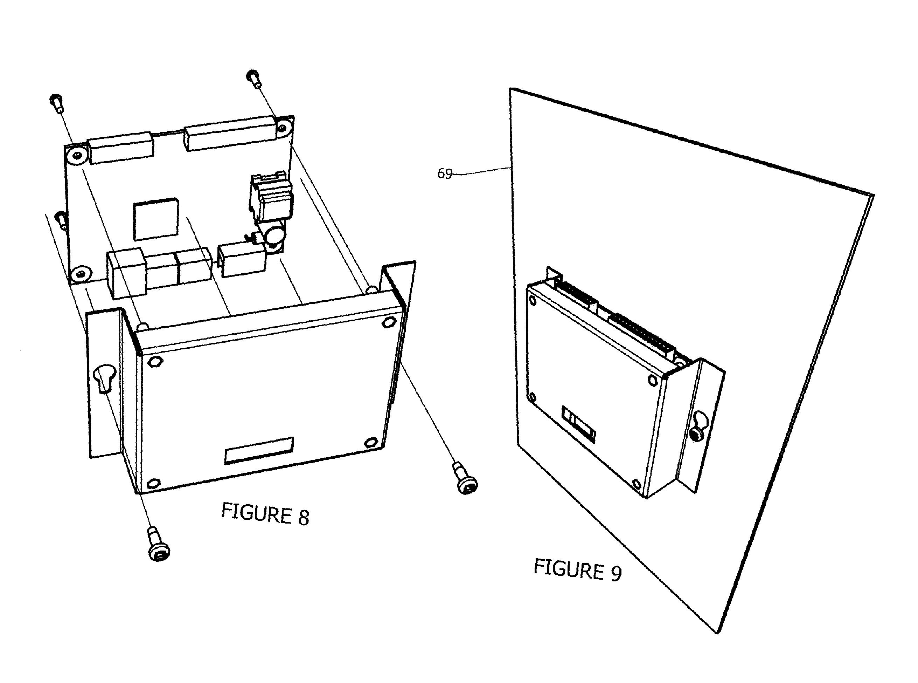

Figures 8 and 9 show another typical installation of the industrial controller 10. The housing 67 is directly fixed to a metallic flat surface 69, enclosing the printed circuit board 32 between the housing 67 and itself. The metallic flat surface 69 may be a part of a cabinet, for example.

Referring again to Figure 5, because the industrial controller 10 has an internal power supply 60 that is compatible with the most common voltages from electrical mains around the world, because its processor 35 may be programmed in a common programming language, because it may incorporate all drivers 37 for any type of controlled device 30 and because of its small size, the industrial controller 10 is advantageously flexible in its applications. Hence, identical industrial controllers 10 may be provided for many different applications. The person skilled in the art will understand that the term identical means that all hardware defining the industrial controllers 10 is identical and excludes the software part, that is the programming language or the instruction sets 100. The instruction set 100, or the program if need be, contained in the processor 35 may have to be adapted for the different applications, depending on the controlled device 30 to be controlled and the operations to be performed by it. Furthermore, input harness 50, output harness 55 and power cord 70 may need to be adapted for each application, depending on the distance between the sensors 25, the controlled device 30 and the industrial controller 10.

For example, in a different embodiment of the present invention, a set of industrial controllers is used (only one controller is shown in Figure 5). Common industrial controllers 10 are used in two different applications where they have to control at least one controlled device 30 each. Identical industrial controllers 10 are used, but they receive a different instruction set 100 for their own processor 35 according to their respective application. These instruction sets 100 are tailored for the way the controlled devices 30 will be controlled and may also be tailored according to the input devices. Since probabilities are that the distances between the industrial controller 10 and the controlled device 30 and between the industrial controllers 10 and the sensor 25 are different for each application, different input harnesses 50 and different output harnesses 55 may need to be used for each application.

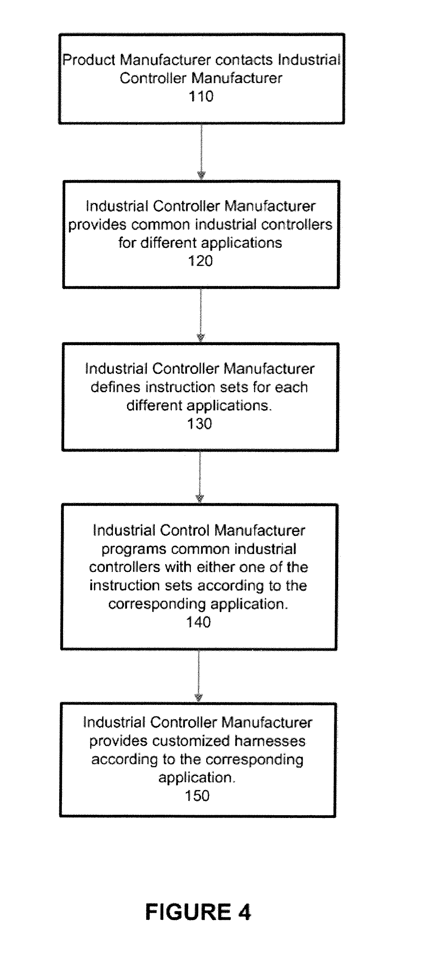

In an industrial application, the industrial controllers 10 may, in particular, be sold to a product manufacturer who integrates these industrial controllers 10 in the design of his products. Figure 4 shows an example of the method with which the industrial controllers would be supplied for different applications. Reference should also be made to Figures 5 and 6 as needed. In step 110 of this example, a product manufacturer who intends to build a large quantity of products corresponding to two different lines of products, contacts an industrial controller manufacturer to get industrial controllers 10 for his two different applications. In step 120, for each application, the industrial controller manufacturer manufactures enough of common industrial controller 10, using generic printed circuit board 32 and generic drivers 37 to supply both product lines of the product manufacturer. In step 130, the industrial controller manufacturer defines an instruction set 100 corresponding to the first application and a second instruction set corresponding to the second application, based on the controlled devices 30, and the sensors 25 needed. In step 140, the industrial controller manufacturers programs with the first instruction set 100 enough industrial controllers 10 to supply the first application and programs with the second instruction set 100 enough industrial controllers 10 to supply the second application. In step 150, the industrial controller manufacturer provides customized harnesses 50, 55 for the first and second applications. In step 160, the only thing left is for the industrial controller manufacturer to supply the product manufacturer with both industrial controller systems each comprising a common controller 10, a customized instruction set 100 and a customized harness 50, 55. Obviously, the product manufacturer is then free to install his industrial controllers 10 in an electrical junction box 65 or not.

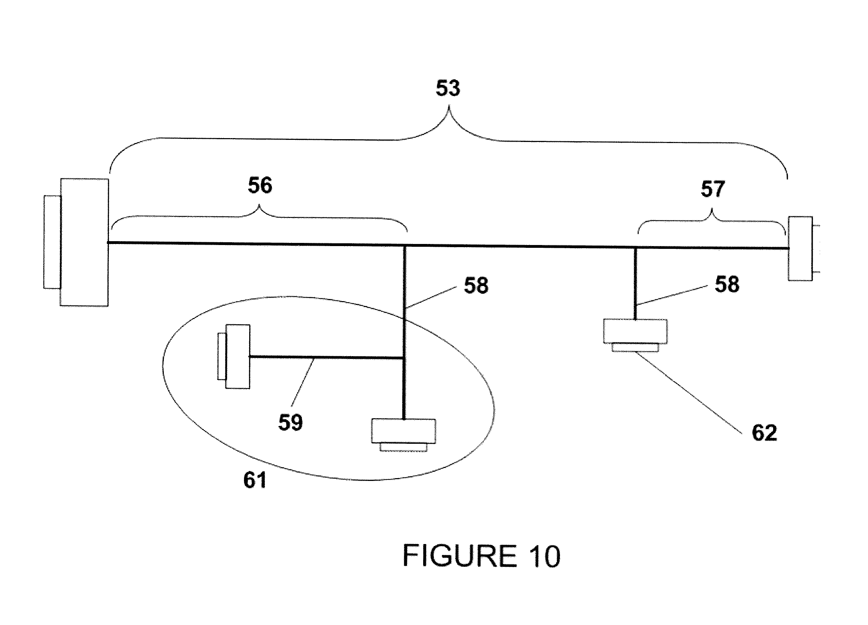

Figure 10 depicts an example of a generic harness 52. Generic harness 52 may represent either input harness 50 or output harness 55. The generic harness 52 has a trunk 53. The trunk 53 comprises both a trunk root 56, a trunk end 57, and branches 58. In the present example, there are two branches 58. Each branch 58 may comprise sub-branches 59, defining a sub-group 61. Each extremity of the harness is ideally fitted with a termination or connector 62.

It will of course be appreciated that many modifications and alternative embodiments are possible within the broad scope of the present invention. For example, in some applications it may advantageous to invert the male and female parts of the connectors. As long as the connector part on the harness and the connector part on the printed circuit board match together, many variations may be done.

It may alternatively be envisioned to use an extension card on the industrial controller 10 for Ethernet communication, either wirelessly or through fiber optic. The industrial controller 10 could be in communication with a remote computer through a HTML (web based) server application. Furthermore, other input / outputs for specific applications could be installed piggy-back via a communication bus.

The invention is not limited in its application to the details of the arrangement of components illustrated in the accompanying drawings, or the description of the steps referred to above, but is defined by the claims that follow.

## Claims

1. A set of industrial controllers for controlling controlled devices comprising a plurality of common industrial controllers, each industrial controller comprising:
at least one printed circuit board;
a processor mounted on said at least one printed circuit board; and
a power supply mounted on said at least one printed circuit board;
wherein at least two of said industrial controllers comprise:
a first instruction set corresponding to a first application; and
a first harness corresponding to said first application;
and wherein at least two of said industrial controllers comprise:
a second instruction set corresponding to a second application; and
a second harness corresponding to said second application;
wherein said first and second applications are different, said first and second instruction sets are different and said first and second harnesses are different.

2. A set of industrial controllers as defined in claim 1 wherein said power supplies are capable of operating directly from electrical mains having a voltage comprised between 85 VAC and 265 VAC.

3. A set of industrial controllers as defined in claim 1 wherein at least one of said industrial controller is mounted within a standard electrical junction box.

4. A set of industrial controllers as defined in claim 3 wherein said standard electrical junction box is of dimensions 4 11/16 inches by 4 11/16 inches.

5. A method for providing industrial controllers for controlling controlled devices comprising:
defining a first control application and a second control application, each one of said control applications involving:
a plurality of measurements or control inputs including at least one measurement input;
a plurality of display or device outputs including at least one controlled device output for controlling an industrial system, process or machine in response to said inputs;
a predetermined expected physical installation of probes or controls providing said inputs, and of displays or controlled devices receiving said outputs;
providing a common industrial controller;
defining a first instruction set and a second instruction set corresponding respectively to said first and second control applications, said instruction sets being operable in said common industrial controller;
providing a first harness and a second harness having dimensions and conductor types corresponding respectively to said first and second inputs, outputs and expected physical installations;
supplying said industrial controller with said first instruction set and said first harness for installation to provide said first control application;
supplying said industrial controller with said second instruction set and said second harness for installation to provide said second control application.

6. A method as defined in claim 5, further comprising:
defining first installer instructions and second installer instructions for each of said applications;
a first installer installing said controller with said first instruction set and said first harness in accordance with said first installer instructions; and
a second installer installing said controller with said second instruction set and said second harness in accordance with said second installer instructions.

7. A method as defined in claim 5 further comprising the step of installing said first industrial controller in a first standard electrical junction box.

8. A method as defined in claim 6 further comprising the step of installing said second industrial controller in a second standard electrical junction box.

9. A method as defined in claim 7 further comprising the step of directly connecting said first industrial controller to electrical mains having a first voltage.

10. A method as defined in claim 8 further comprising the step of directly connecting said second industrial controller to electrical mains having a second voltage different from said first voltage.
